(19) Europäisches Patentamt
European Patent Office
Office européen des brevets

(11) Numéro de publication: **0 235 485**
**A1**

(12) # DEMANDE DE BREVET EUROPEEN

(21) Numéro de dépôt: **86420289.0**

(22) Date de dépôt: **25.11.86**

(51) Int. Cl.[4]: **C08G 77/62**, C08L 83/16, C04B 35/00, C04B 35/56

(30) Priorité: **28.11.85 FR 8517817**

(43) Date de publication de la demande: **09.09.87 Bulletin 87/37**

(84) Etats contractants désignés: **AT BE CH DE ES FR GB GR IT LI LU NL SE**

(71) Demandeur: **RHONE-POULENC SPECIALITES CHIMIQUES**
**"Les Miroirs" 18, Avenue d'Alsace**
**F-92400 Courbevoie(FR)**

(72) Inventeur: **Lebrun, Jean-Jacques**
**24, rue Pierre Brunier**
**F-69300 Caluire(FR)**
Inventeur: **Porte, Hugues**
**65, rue de Sèze**
**F-69006 Lyon(FR)**

(74) Mandataire: **Cazes, Jean-Marie et al**
**RHONE-POULENC INTERSERVICES Service Brevets Chimie 25, quai Paul Doumer**
**F-92408 Courbevoie Cédex(FR)**

(54) **Procédé de traitement catalytique d'un polysilazane comportant en moyenne au moins deux groupes hydrocarboné à insaturation aliphatique par molécule.**

(57) La présente invention concerne un procédé de traitement d'un polysilazane, caractérisé en ce qu'on traite catalytiquement en présence d'une quantité catalytiquement efficace d'un catalyseur de coordination un polysilazane présentant en moyenne au moins 2, de préférence au moins 3 groupes hydrocarboné à insaturation aliphatique par molécule.

Les polysilazanes ainsi traités présentent une tenue thermique élevée et sont utilisables notamment comme précurseurs de produits céramiques avec un rendement en produit minéral élevé.

EP 0 235 485 A1

# PROCEDE DE TRAITEMENT CATALYTIQUE D'UN POLYSILAZANE COMPORTANT EN MOYENNE AU MOINS DEUX GROUPES HYDROCARBONE A INSATURATION ALIPHATIQUE PAR MOLECULE

La présente invention concerne un procédé de traitement catalytique d'un polysilazane comportant en moyenne au moins deux groupes hydrocarbonés à insaturation aliphatique par molécule.

Les organopolysilazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

Ces polysilazanes peuvent être notamment mis en forme et être pyrolysés sous forme de $Si_3N_4$, SiC ou leurs mélanges. Pour fabriquer du nitrure de silicium, il existe une autre voie qui consiste à faire réagir à haute température et en phase vapeur des chlorosilanes ($SiCl_4$, $HSiCl_3$ et $H_2SiCl_2$) sur l'ammoniac. Selon cette méthode aboutissant directement à un produit en poudre, il est difficile de fabriquer des objets en forme, en particulier, de fibres. Par contre, les polysilazanes peuvent être filés en fibres continues dont la pyrolyse aboutit à des fibres céramiques.

Ils peuvent être mis sous forme de pellicules plus ou moins minces, de pièces massives moulées, et être utilisés comme liant pour fibre céramique ou fibre de carbone et comme liant de frittage pour pièces céramiques poreuses.

Il existe toutefois des difficultés pour mettre en forme de façon aisée et économique ces polysilazanes sous forme de fibres ou de revêtements qui, après pyrolyse, donnent des produits céramiques sous forme de fibres, de pellicules, de revêtements plus ou moins minces et de pièces moulées.

Dans le brevet américain US-A 3 853 567 on a essayé de donner une première solution au problème ci-dessus.

Selon ce brevet on propose un procédé de fabrication de pièces en forme telles que des fibres comportant du carbure de silicium, du nitrure de silicium ou leurs mélanges avec d'autres produits céramiques, en effectuant un premier traitement thermique à une température comprise entre 200 et 800 °C d'un polysilazane, en vue d'obtenir une résine carbosilazane fusible qui peut être filée à l'état fondu puis pyrolysée à une température comprise entre 800 et 2 000 °C.

Le brevet ci-dessus constitue certes un progrès important mais il présente le double inconvénient de nécessiter un premier traitement thermique à une température pouvantêtre déjà très élevée (200 -800 °C) et de travailler un carbosilazane à l'état fondu sous des conditions anhydres et en atmosphère inerte. De plus, le rendement pondéral en céramique peut être insuffisant.

Dans la demande de brevet japonais KOKAI 77/160 446, on décrit un procédé de polymérisation d'organopolysilazanes de haut poids moléculaire en utilisant comme catalyseur de traitement des organopolysilazanes, des terres acides. Ce procédé présente cependant l'inconvénient majeur de nécessiter la séparation du catalyseur solide par filtration impliquant l'emploi de solvant dans le cas de polymères atteignant des viscosités élevées.

Par ailleurs cette demande de brevet exclue la possibilité d'utiliser des polysilizanes présentant des groups ≡ SiH mais n'exclue pas la possibilité d'utiliser des polysilazanes présentant des groupes hydrocarbonés aliphatiques insaturés liés aux atomes de silicium comme des groupes alcényle par exemple vinyle ou allyle sans donner d'exemples. Toutefois, l'enseignement de cette demande est limitée à une réaction de polymérisation par ouverture de liaison silazane.

Le brevet US-A 3 007 886 décrit un procédé de traitement de polysilazanes par des sels métalliques d'acides monocarboxyliques solubles dans les solvants hydrocarbonés et le brevet US-A 3 187 030 décrit un procédé de traitement de polysilazanes par des sels métalliques particuliers d'acides inorganiques forts, la catalyse étant donc assurée par les cations métalliques jouant le rôle d'acide de Lewis. Toutefois, l'enseignement de cette demande est limitée à une réaction de polymérisation par ouverture de liaison silazane.

La présente invention a pour but de proposer un moyen simple, efficace, économique et de mise en oeuvre aisée pour préparer sous des formes les plus diverses (fils, articles moulés, revêtements, pellicules, etc .....) des polysilazanes qui, lors de leur pyrolyse, à une température comprise entre 1 000 et 2 000 °C donnent des produits céramiques présentant d'excellentes propriétés.

Il est en outre souhaitable et c'est un autre but de la présente invention de pouvoir diposer facilement d'un polysilazane qui soit assez stable à l'hydrolyse et qui conduise par pyrolyse avec un rendement pondéral élevé, à un matériau céramique. Il est nécessaire pour cela que le polysilazane présente lors de la pyrolyse une bonne tenue thermique tout en demeurant solidaire du support à revêtir et à imprégner.

Ces buts et d'autres sont atteints par la présente invention qui concerne en effet un procédé de traitement catalytique d'un polysilazane, caractérisé en ce qu'on traite catalytiquement au moins un polysilazane présentant en moyenne au moins 2, de préférence au moins 3 groups hydrocarboné à insaturation aliphatique par molécule, par une quantité catalytiquement efficace d'un catalyseur de coordination de l'insaturation aliphatique.

Le polysilazane de départ utilisé pour la mise en oeuvre du procédé de l'invention présente donc par molécule au moins 2, de préférence au moins 3 motifs choisis parmi les motifs de formule (Ia), (Ib) et (Ic) :

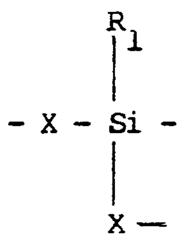 (Ia) 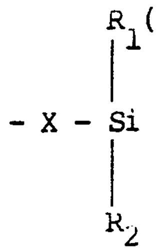 (Ib) 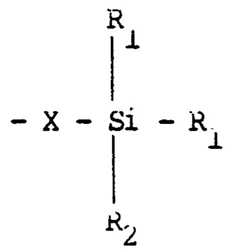 (Ic)

dans lesquelles les radicaux $R_1$ identiques ou différents, sont choisis parmi les radicaux hydrocarbonés à insaturation aliphatique alcénique ou alcynique et les radicaux $R_2$ sont choisis parmi les radicaux $R_1$, un atome d'hydrogène, un radical hydrocarboné aliphatique saturé et un radical aryle, alkylaryle ou arylalkyle ; et les chaînons X identiques ou différents représentent les chaînons $(CH_2)_n$ [n étant un nombre entier compris entre 1 et 8], -Si-et N-, au moins 50 % des X étant N-.

Dans le polysilazane de départ, les motifs autres que (Ia), (Ib), (Ic) peuvent être des motifs choisis parmi les motifs de formule :

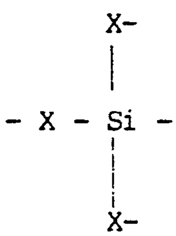 (IIa) 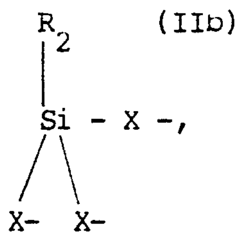 (IIb) 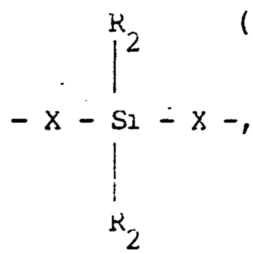 (IIc) 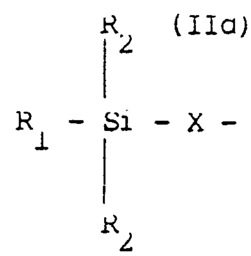 (IIa)

dans lesquelles les radicaux $R_2$ et les chaînons X ont la signification ci-dessus.

Dans les formules (Ib) et (Ic), (IIb), (IIc) et (IId), le radical $R_1$ peut être un radical aliphatiquement insaturé ayant de préférence de 2 à 8 atomes de carbone ; on peut citer les radicaux éthynyle, propynyle, etc ...., les radicaux vinyle, allyle, etc .... et les radicaux cycloalcényle, comme les radicaux cyclopentényle, cyclohexényle, cycloheptényle et cyclooctényle. Le radical vinyle est le radical préféré. Le radical $R_2$ peut être un radical hydrocarboné aliphatique saturé, de préférence ayant de 1 à 8 atomes de carbone, comme un radical méthyle, éthyle, propyle, butyle, pentyle, hexyle, heptyle et octyle ; le radical $R_2$ peut être également un radical hydrocarboné cyclique saturé ayant de 3 à 7 atomes de carbone comme le radical cyclopropyle, cyclobutyle, cyclopentyle, cyclohexyle et cycloheptyle ; $R_2$ peut être un radical arylalkyle comme les radicaux benzyle et phényléthyle, ou un radical alkylaryle comme les radicaux tolyle et xylyle. Les radicaux méthyle et phényle sont les radicaux préférés.

De préférence X est choisi parmi N-et -Si-.

Les polysilazanes ci-dessus sont des produits bien connus décrits en détail dans la littérature.

Ils peuvent être notamment obtenus comme produit de réaction d'au moins un organohalogénomonosilane de formule :

$R_aY_{4-a}Si$

dans laquelle Y est un halogène qui est généralement l'atome de chlore et le ou les radicaux R identiques ou différents peuvent avoir la définition de $R_1$ et $R_2$ ci-dessus a est un nombre entier compris entre 0 et 3 inclus, sur un composé organique ou organosilylé comportant au moins un groupement $NH_2$ ou NH comme par exemple l'ammoniac, les amines primaires ou secondaires, les silylamines, les amides, les hydrazines, les hydrazides, etc .....

Dans ce qui suit Vi = $CH_2$ = CH-.

Comme organohalogénosilane utilisable seul ou en mélange on peut citer :
$(CH_3)_2SiCl_2$, $(CH_3)_3SiCl$, $CH_3SiCl_3$, $SiCl_4$, $Vi_3SiCl$, $Vi_2SiCl_2$, $ViSiCl_3$
$(C_6H_5)_2SiCl_2$, $(C_6H_5)(CH_3)SiCl_2$, $C_6H_5SiCl_3$, $(CH_3)_2ViSiCl$
$(CH_3)(CH_3CH_2)SiCl_2$, $CH_3ViSiCl_2$
$CH_3HSiCl_2$, $H_2SiCl_2$, $(CH_3)_2HSiCl$, $HSiCl_3$

Tout ou partie des organohalogénosilanes de départ peuvent être remplacer par au moins un organohalogénodisilane de formule :
$R_b\ Cl_{3-b}SiSiR_c\ Cl_{3-c}$
dans laquelle les radicaux R identiques ou différents peuvent avoir la définition de $R_1$ et $R_2$, b est un nombre entier compris entre 0 et 3 inclus et c est un nombre entier compris entre 0 et 2, en vue de faire des organo(disilyl)silazane.

Comme exemples de composés comportant au moins un groupement $NH_2$ ou NH et utilisables pour la synthèse des polysilazanes ci-dessus, on peut citer : l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthyldisilazane.

Les polysilazanes de départ présentant des motifs tels que deux répondant aux formules (Ia), (Ib), (Ic), - (IIa), (IIb), (IIc) et (IId) ci-dessus peuvent être préparés selon des méthodes bien connues comme par exemple décrites dans Journal of Polymer Science A 2 3 179 (1964) et par Redl, Silazane Polymer, Arpa-19, Advanced Research Projects Agency, octobre 1965, dans les brevets US 3 853 567 et 3 892 583, dans le brevet européen 75 826 et dans le brevet français 2 497 812, cités comme référence.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Dans les aminolysats, on transpose la notion de fonctionnalité en définissant une fonctionnalité $f^N = 1$ apportée par une liaison Si-N.

Ainsi, dans les aminolysats, du type polysilazane, on distingue les motifs :

$M^N$ : 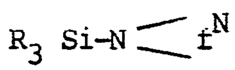 = 1

considéré comme monofonctionnel

$D^N$ : 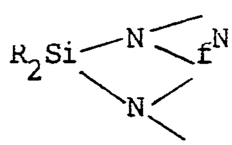 =2

considéré comme difonctionnel

$T^N$ : 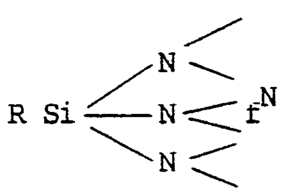 = 3

considéré comme trifonctionnel

et $Q^N$ : 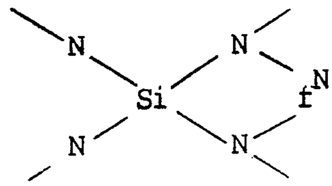 $f^N = 4$

considéré comme tétrafonctionnel.

Les aminolysats de départ sont généralement sous forme de liquide de viscosité faible ou élevée, ou même à l'état pâteux, allant jusqu'à l'état solide.

Or, ces aminolysats comportent généralement une teneur qui peut être importante en espèces de faible masse moléculaire susceptibles d'être éliminées lors de la pyrolyse et par conséquent de diminuer d'autant le rendement pondéral en produit céramique ramené au produit de départ.

En plus, ces aminolysats, en particulier dans le cas où ils comportent une teneur élevée en silicium difonctionnel (par exemple $D^N$) ne sont pas suffisamment stables thermiquement lors de la pyrolyse ; ils se dégradent par rupture des liaisons :

Si -NH ou Si -N

pour donner naissance à des oligomères volatils diminuant d'autant le rendement pondéral en produit céramique ramené au produit de départ.

De façon tout à fait inattendue, le procédé de l'invention comportant un traitement catalytique permet d'une part d'incorporer les volatils dans les macromolécules de l'aminolysat et d'autre part en présence de motifs trifonctionnels siliciés (par exemple $T^N$) de réarranger et de surréticuler le réseau de l'aminolysat qui de ce fait est thermiquement plus stable lors de la pyrolyse. Le traitement catalytique de l'invention provoque donc, suivant la nature de l'aminolysat de départ, une polymérisation et/ou une copolymérisation et/ou un réarrangement des molécules.

En effet sans vouloir se limiter à une explication scientifique, le procédé de traitement selon l'invention permet non seulement de polymériser par ouverture de liaisons silazanes les oligomères polyzanes provenant de l'aminolyse ou de la coaminolyse, mais encore de réticuler et/ou de polymériser par réaction d'un radical vinyle activé par le catalyseur de coordination sur un autre vinyle ou un azote primaire ou secondaire.

Un autre avantage très important découlant du traitement catalytique selon l'invention est l'obtention d'un aminolysat traité ayant une résistance améliorée à l'oxygène et à l'humiditié de l'air.

Le catalyseur est généralement utilisé à des concentrations comprises entre 1 et 10 000 ppm d'acide ramené au polysilazane de départ et de préférence entre 10 et 5 000 ppm.

La température de réaction est comprise entre 20 et 180 °C, de préférence entre 120 et 160 °C.

La réaction peut être conduite en masse, ce qui représente un net avantage. On peut toutefois utiliser un solvant organique tel que le toluène, le chlorure de méthylène, le benzène, le xylène, l'hexane, l'heptane, etc ..... La réaction peut être conduite à pression atmosphérique, sous pression ou sous pression réduite. La durée de la réaction est bien entendu fonction de la concentration en catalyseur et de la température de la réaction. Pour une température comprise entre 120 et 160 °C et une concentration en acide comprise entre 10 et 5 000 ppm, la durée de la réaction est avantageusement comprise entre 30 minutes et 30 heures.

Par catalyseur de coordination de l'insaturation aliphatique selon l'invention on entend un composé susceptible d'activer l'insaturation et d'initier les réactions indiquées ci-dessus. Ces catalyseurs de coordination incluent notamment, les acides de Bronsted, les acides de Lewis et les catalyseurs du type Ziegler-Natta.

Parmi les acides de Bronsted on utilise de préférence les acides minéraux ou organiques forts.

Par acide minéral ou organique fort on entend selon l'invention n'importe quel acide présent ou bien généré in-situ dans le milieu réactionnel présentant pour son atome d'hydrogène le plus acide un pKa dans l'eau qui soit inférieur à 5. Les acides plus particulièrement utilisables sont les acides trifluorométhanesulfonique, perchlorique, trichloromethanesulfonique, trichlorométhanecarboxylique, trichloroacétique, chlorhydrique, acétique, nitrique, picrique, pyrophosphorique, chranique, p-toluènesulfonique, chlroroplatinique.

Le terme acide minéral ou organique fort inclut également les résines échangeuses d'ions possèdant des anions d'acide fort adsorbés ou fixés sur les résines. Des exemples de ces résines sont les résines échangeuses d'ions sulfonées, décrites par exemple dans les brevets US-A 3 037 052 et 3 322 722.

On peut également utiliser des terres acides du type Tonsil® ou Actisil®, ou de la montmorillonite lavée à l'acide sulfurique. On peut également utiliser un catalyseur du type Sphérosil® constitué par un support minéral poreux recouvert d'un film polymérique porteur de groupement sulfonique ou phosphonique comme par exemple décrit dans le brevet français FR-A 2 505 850.

Par acides de Lewis on entend selon l'invention les produits et agents d'acidification qui répondent à la définition traditionnelle des acides de Lewis, comme par exemple $AlCl_3$. Les acides de Lewis préférés utilisables dans le procédé de l'invention sont notamment :

$BASO_4$
$BCl_3$
$BBR_3$
$BF_3(C_2H_5)_2O$
$BF_3.2CH_3OH$
$BF_3.H_3PO_4$
$AlCl_3$
$AlCl_3.NOCl$
$Al_2O_3$
$Al(PO_3)_3$
$AL(OH)_2C_{16}H_{31}O_2$
$AL(C_2H_5)_3$
$AL(C_3H_7)_3$
$AL_2(SO_4)_3$
$ALPO_4$
$AL(C_7H_5O_3)_3$
$ALTL(SO_4)_2$
$TIC_2H_3O_2$
$TLBR_3$
$TIClO_3$
$TIClO_4$

Les catalyseurs de Ziegler-Natta sont bien connus de l'homme de métier et on peut en particulier utiliser les catalyseurs décrits à la page 553 du livre "Principes de polymérisation" de George ODIAN Mc Graw-Hill Book Company 1970 et à la page 183 de l'ouvrage "Polymer Chemistry" de Bruno Vollmert Springer-Verlag 1973.

Parmi ces catalyseurs, on peut utiliser plus particulièrement $TiCl_4$, $TiCl_3$, $(C_2H_5)_3Al$, $(C_2H_5)AlCl_2$, $ZrCl_4$, $CrCl_2$ et $(C_2H_5)_2TiCl_2$.

Dans l'application revêtement, pellicules, couches minces, la composition organopolysilazane traitée selon l'invention est de préférence utilisée sans solvant. Dans ce cas, on choisit une viscosité à 25 °C comprise entre 10 et 5 000 mPa.s, de préférence entre 100 et 1 000 mPa.s.

Des viscosités supérieures peuvent être utilisées, mais il est alors nécessaire quand on veut utiliser les compositions pour enduire ou imprégner un support, de solubiliser la composition dans un solvant organique compatible avec les polysilazanes comme le benzène, le toluène, l'hexane, le cyclohexane, l'éther isopropylique, l'éther éthylique, le dichlorométhane et le chlorobenzène.

Dans l'application fibres on doit utiliser des viscosités supérieures à 5 000 mPa.s. On peut opérer sans solvant à l'état fondu ou en solution, la réticulation s'effectuant à la sortie de la filière par passage dans un four et/ou sous rayonnement (UV, faisceaux d'électron).

Les compositions polysilazanes selon l'invention peuvent contenir en outre des charges de préférence choisies parmi $SiO_2$, $Si_3N_4$, SiC, BN, $B_2O_3$, $B_4C$, AlN, $Al_2O_3$, $Al_4C_3$, TiN, $TiO_2$, TiC, $ZrO_2$, ZrC, $VO_2$ etc .....

La composition polysilazane selon l'invention peut en outre servir de matrice pour des fibres céramiques réalisées notamment en SiC, $SiO_2$, $Si_3N_4$, $B_4C$ etc .....

La composition polysilazane selon l'invention est particulièrement utile pour revêtir ou imprégner des supports rigides ou souples en métal ou en fibres céramiques.

Les supports recouverts ou imprégnés de la composition durcie, ou les fibres, peuvent subir immédiatement ou ultérieurement un traitement de pyrolyse de préférence sous vide ou sous pression ou sous atmosphère inerte avec une montée en température allant de la température de réticulation à 1 500-2 000 °C, suivant la nature de la céramique ou du liant désirée.

La composition suivant l'invention permet donc de faire des demi-produits intermédiaires pouvant être conservés à l'air ambiant et qui peuvent être ultérieurement pyrolysés.

Ceci constitue donc un procédé particulièrement avantageux pour déposer ou imprégner sur un support une matière céramique, et pour obtenir des fibres de céramique et des liants de frittage.

Dans les exemples suivants, illustrant l'invention sans en limiter la portée, on analyse les polysilazanes obtenus, traités catalytiquement ou non, par thermogramométrie dynamique (TGA) en les pyrolysant de la température ambiante (20 °C) à 1 400 °C sous azote avec une vitesse de montée en température de 2 °C/minute. On indique dans les exemples le rendement TGA (% en poids de résidu solide à 1 4 00 °C).

La viscosité est mesurée à 25 °C et est donnée en mPa.s. De plus dans les formules Me = $CH_3$, les réactions d'ammonolyse et de coammonolyse sont effectuées dans un premier réacteur I de 3 litres de forme cylindrique (muni d'une double enveloppe pour refroidir le volume réactionnel). Le réacteur est surmonté d'un condenseur de gaz. L'agitation mécanique est assurée par deux turbines RUSHTON® (une turbine à pales droites, une turbine à pales inclinées) disposées le long de l'arbre d'agitation. L'introduction de gaz $N_2$ et $NH_3$ se fait par l'intermédiaire d'un tube fin plongeant dans la solution de façon à faire apparaître $NH_3$ juste sous la première turbine d'agitation. En fin d'ammonolyse le mélange réactionnel est soutiré et est introduit dans un deuxième réacteur II muni d'une agitation mécanique (turbine RUSHTON® à pales droites) et d'un lit filtrant (porosité moyenne 10 $\mu$m). Les ammonolysats sont filtrés et les solvants de rinçage sont introduits dans un troisième réacteur III de 6 litres muni d'une double enveloppe et d'une agitation mécanique, d'une turbine de RUSHTON® à pales droites. Ce réacteur où l'on effectue le traitement catalytique est inerté sous $N_2$ ou mis sous vide (25 mbar).

L'ensemble de l'installation est mis sous atmosphère inerte plusieurs heures avant la manipulation. L'ensemble de la réaction, ammonolysé, filtration, évaporation du solvant se fait sous azote sec. Les produits obtenus sont placés dans des flacons étanches inertés à l'azote et conservés, pesés, manipulés sous boîte à gants inertée à l'azote.

Dans ce qui suit, sauf mentions contraires, les pourcentages indiqués sont en poids.

-EXEMPLE 1 :

203 g de $MeViSiCl_2$ (1,44 mole) de pureté 99 % sont placés dans le réacteur I en présence de 1,3 litre d'éther isopropylique. On introduit l'ammoniac dans le réacteur I avec un débit de 6 $cm^3$/s additionné de $N_2$ avec un débit de 3 $cm^3$/s pendant 6 heures 30 minutes (soit environ 6,1 moles de $NH_3$ introduites). La température du réacteur I est maintenue à 2 °C pendant l'introduction de $NH_3$ (6 heures) et est portée à 20 °C toujours avec introduction de $NH_3$ pendant 1 heure 30 minutes. Le chlorure d'ammonium éliminé est séché sous vide et pesé.

Après élimination du solvant sous vide (25 mbar à 60 °C puis 1,5 mbar à 60 °C pendant 1 heure), on récupère 119 g d'un liquide limpide de viscosité 3 mPa.s à 25 °C. Le rendement pondéral de la réaction est de 97 %.

Les solvants récupérés sont analysés par chromatographie en phase gazeuse pour identifier et quantifier le taux de volatils éliminés lors de la dévolatilisation du produit.

Le produit lui-même est analysé par IR, RMN ou $^{29}$Si et RMN du proton $^1$H (RMN 360 MHz dans $C_6D_6$) et chromatographie en phase gazeuse. Il est constitué principalement de deux produits cycliques :

$D_3^{NVi}$ :

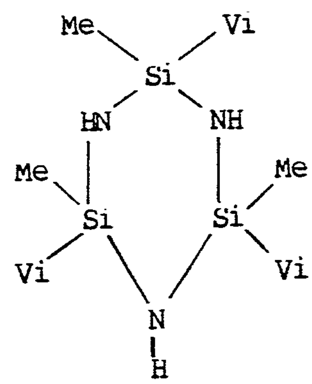

89 % molaire

et $D_4^{NVi}$ :

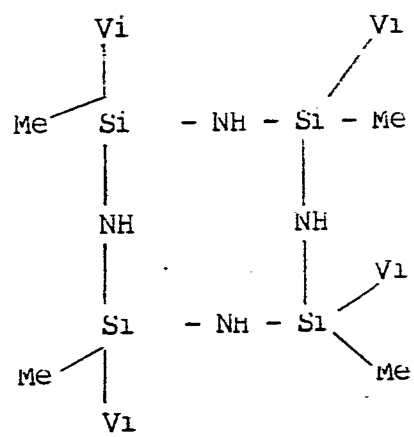

11 % molaire

-EXEMPLE COMPARATIF 2a ET EXEMPLES 3 A 8 :

Dans ces exemples on traite dans le réacteur III l'ammonolysat obtenu à l'exemple 1 avec différents catalyseurs acides suivant une concentration initiale de $3.10^{-2}$ moles par litre.

L'exemple comparatif 2a est effectué sans catalyseur. Les conditions expérimentales du traitement et les résultats obtenus sont rassemblés dans le tableau I ci-après.

TABLEAU I

| EXEMPLE | ACIDE | T en ° C | Durée en heures | RR* % | TGA % |
|---|---|---|---|---|---|
| 2a | - | - | - | 4 | - |
| 3 | $CCl_3COOH$ | 140 | 3 h 00 | 10 | 58 |
| 4 | $CH_3SO_3H$ | 140 | 3 h 00 | 15 | 40 |
| 5 | $CH_3COOH$ | 140 | 4 h 00 | 8 | 46 |
| 6 | $HClO_4$ | 140 | 3 h 00 | 10 | 56 |
| 7 | $CF_3SO_3H$ | 140 | 1 h 00 | 65 | 65 |
| 8 | $CF_3SO_3H$ | 140 | 3 h 00 | 99 | 62 |

* RR = rendement en polymère : mesuré de la manière suivante : on introduit 2 g de produit dans un bécher (manipulation sous $N_2$ sec), que l'on porte à 175 °C (pendant 2 heures sous un vide de 1,3 mbar). Après refroidissement, le bécher est pesé, ce qui permet de mesurer le rendement en polymère.

-EXEMPLE 9 :

On effectue la coammonolyse suivant le procédé de l'exemple 1, de :

-107, 2 g de $CH_3SiCl_3$ (0,72 mole)

-46,25 g de $(CH_3)_2SiCl_2$ (0,36 mole)

-50,76 g de $CH_3(CH_2=CH)SiCl_2$ (0,36 mole)

On opère en présence de 1,3 litre d'éther isopropylique. La réaction s'effectue à 2 °C avec un débit de $NH_3$ = 6 $cm^3/s$ pendant 6 heures 45. On récupère 98,7 g d'une huile visqueuse de viscosité 110 mPa.s, soit un rendement pondéral de la coammonolyse de 95 %.

Le produit a été identifié par RMN du $^{29}Si$, RMN du proton et IR. Sa composition correspond bien à celle des produits engagés $T^N/D^N$ = 1 et $D^{NVi}/D^N$ = 1.

-EXEMPLE COMPARATIF 10a ET EXEMPLES 11 A 14 :

Dans ces exemples on traite dans le réacteur III le coammonolysat obtenu à l'exemple 9 avec différents catalyseurs acides suivant une concentration initiale de $3.10^{-2}$ moles par litre. L'exemple comparatif 10a est effectué sans catalyseur. Les conditions expérimentales du traitement et les résultats obtenus sont rassemblés dans le tableau II ci-après.

TABLEAU II

| EXEMPLE | ACIDE | T en °C | Durée en heures | RR* % | TGA % |
|---|---|---|---|---|---|
| 10a | - | - | - | 70 | 40 |
| 11 | $CH_3SO_3H$ | 140 | 5 h 00 | 68 | 54 |
| 12 | $CF_3COOH$ | 140 | 3 h 00 | 94 | 65 |
| 13 | $HClO_4$ | 140 | 3 h 00 | 91 | 72 |
| 14 | $CF_3SO_3H$ | 140 | 0 h 30 | 95 | 72 |

* RR = rendement en polymère : mesuré de la manière suivante : on introduit 2 g de produit dans un bécher (manipulation sous $N_2$ sec), que l'on porte à 175 °C (pendant 2 heures sous un vide de 1,3 mb). Après refroidissement, le bécher est pesé, ce qui permet de mesurer le rendement en polymère.

## Revendications

1. -Procédé de traitement catalytique d'un polysilazane, caractérisé en ce qu'on traite catalytiquement au moins un polysilazane présentant en moyenne au moins 2, de préférence au moins 3 groupes hydrocarbonés à insaturation aliphatique par molécule, par une quantité catalytiquement efficace d'un catalyseur de coordination de l'insaturation aliphatique.

2. -Procédé selon la revendication 1, caractérisé en ce que le catalyseur de coordination est choisi parmi les acides de Bronsted, les acides de Lewis et les catalyseurs du type Ziegler-Natta.

3. -Procédé selon la revendication 1, caractérisé en ce que le catalyseur est un acide organique ou minéral fort.

4. -Procédé selon l'une quelconque des revendications 1 à 3, caractérisé en ce que la réaction s'effectue en masse.

5. -Procédé selon l'une quelconque des revendications 1 à 3, caractérisé en ce que la réaction s'effectue en solution dans un solvant organique.

6. -Procédé selon l'une quelconque des revendications précédentes, caractérisé en ce que le catalyseur est utilisé à des teneurs comprises entre 1 et 10 000 ppm par rapport au poids du seul polysilazane de départ.

7. -Procédé selon l'une quelconque des revendications précédentes, caractérisé en ce que la température de traitement est comprise entre la température ambiante et 180 °C.

8. -Procédé selon l'une quelconque des revendications précédentes, caractérisé en ce que la durée de la réaction est comprise entre 30 minutes et 30 heures.

9. -Procédé selon l'une quelconque des revendications précédentes, caractérisé en ce que le traitement est effectué sous pression normale, sous pression ou sous vide.

10. -Polysilazane susceptible d'être obtenu par la mise en oeuvre d'un procédé tel que défini à l'une quelconque des revendications 1 à 9.

Office européen des brevets

# RAPPORT DE RECHERCHE EUROPEENNE

Numéro de la demande

EP 86 42 0289

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 161 751 (DOW CORNING) * Revendications 1-3; page 3, paragraphe 3; page 4, paragraphes 1-3; page 10, lignes 12,13; page 13, paragraphe 1 * --- | 1-10 | C 08 G 77/62<br>C 08 L 83/16<br>C 04 B 35/00<br>C 04 B 35/56 |
| X | US-A-4 535 007 (J.P. CANNADY) * Revendications 1,9 * --- | 1-10 | |
| A,D | US-A-3 187 030 (W.M. BOYER) * Revendications 1,2 * ----- | 1 | |

DOMAINES TECHNIQUES RECHERCHES (Int. Cl.4)

C 08 G
C 08 L
C 04 B

Le présent rapport de recherche a été établi pour toutes les revendications

| Lieu de la recherche | Date d'achèvement de la recherche | Examinateur |
|---|---|---|
| LA HAYE | 27-04-1987 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant